# EUROPÄISCHE PATENTSCHRIFT

(11) **EP 3 404 232 B1**
(45) Veröffentlichungstag und Bekanntmachung des Hinweises auf die Patenterteilung: **13.11.2019**
(21) Anmeldenummer: 18168723.7
(22) Anmeldetag: 23.04.2018
(51) Int. Cl.: F02B 75/04, F16C 7/06, F16K 15/02

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 15.05.2017 DE 102017110446
(43) Veröffentlichungstag der Anmeldung: 21.11.2018
(73) Patentinhaber: ECO Holding 1 GmbH, 97828 Marktheidenfeld (DE)
(72) Erfinder: Mudra, Alexander, 97828 Marktheidenfeld (DE); Schulze, Dietmar, 35516 Münzenberg (DE)

(56) Entgegenhaltungen:
- WO-A1-2016/127985
- DE-A1-102012 112 481
- DE-A1-102015 103 205
- DE-A1-102015 213 286
- DE-A1-102016 104 958

## Beschreibung

### Technisches Gebiet

Die Erfindung betrifft einen Pleuel für eine Brennkraftmaschine mit variabler Verdichtung mit wenigstens einer in einem Pleuelkörper ausgebildeten Hydraulikkammer, wobei die Hydraulikkammer mittels eines Rückschlagventils mit einer Lagerschale des Pleuels bzw. einem Tank verbindbar ist, wobei das Rückschlagventil ein Schließelement und ein Ventilsitz umfasst, welches Schließelement in Sperrstellung einen Fluidpfad durch Anlage an den Ventilsitz sperrt. Ferner betrifft die Erfindung eine Brennkraftmaschine mit einem einstellbaren Verdichtungsverhältnis mit wenigstens einem Pleuel.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulisch oder mechanisch betätigbaren Umschaltventilen eine Exzenter-Verstelleinrichtung eines Pleuels betätigen.

Ein derartiger Pleuel ist beispielsweise aus der DE 10 2012 112 461 A1 bekannt und umfasst eine Exzenter-Verstelleinrichtung zur Verstellung einer effektiven Pleuelstangenlänge, wobei die Exzenter-Verstelleinrichtung einen mit einem Exzenterhebel zusammenwirkenden Exzenter aufweist, sowie zwei Kolben, welche jeweils in einer Hydraulikkammer verschiebbar geführt sind und in welchen an dem Exzenterhebel angreifende Exzenterstangen der Exzenter-Verstelleinrichtung gelagert sind. Ein Verstellweg der Exzenter-Verstelleinrichtung ist mittels eines Umschaltventils verstellbar. Durch die Änderung des Verstellwegs wird die effektive Pleuelstangenlänge geändert. Damit kann die Verdichtung einer Brennkraftmaschine gesteuert werden. Rückschlagventile im Pleuel, welche beispielsweise aus der DE 10 2012 112 481 A1 bekannt sind, verhindern jeweils einen Rückfluss von Hydraulikfluid aus den Hydraulikkammern in die Lagerschale bzw. einen Tank.

Aus der DE 10 2016 104 958 A1 und der DE 10 2015 103 205 A1 sind Rückschlagventile bekannt, welche mit einem Ventilgehäuse im Pleuelkörper eines Pleuels angeordnet sind.

### Offenbarung der Erfindung

Eine Aufgabe der Erfindung ist es, einen verbesserten Pleuel zu schaffen, welcher eine große Zuverlässigkeit, eine hohe Lebensdauer aufweist und gleichzeitig eine vereinfachte und damit kostengünstige Herstellung und Montage erlaubt.

Eine weitere Aufgabe der Erfindung ist es, eine verbesserte Brennkraftmaschine mit einem einstellbaren Verdichtungsverhältnis mit einem Pleuel anzubieten, welche einfach und kostengünstig ausgestaltet ist.

Die vorgenannten Aufgaben werden nach einem Aspekt der Erfindung gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung mit wenigstens einer Hydraulikkammer vorgeschlagen, wobei die Hydraulikkammer mittels eines Rückschlagventils mit einer Lagerschale des Pleuels bzw. einem Tank verbindbar ist. Das Rückschlagventil umfasst ein Schließelement und einen Ventilsitz. Das Schließelement sperrt in Sperrstellung einen Fluidpfad durch Anlage an den Ventilsitz. Dabei ist das Schließelement in einer Bohrung des Pleuelkörpers angeordnet und der Ventilsitz ist direkt in den Pleuelkörper eingebracht vorgesehen ist. Das Rückschlagventil besteht hierdurch aus möglichst wenigen Bauteilen, so dass der Pleuel besonders kostengünstig vorgesehen werden kann. Zusätzliche Montagevorgänge können erfindungsgemäß entfallen.

Der erfindungsgemäße Pleuel für eine Brennkraftmaschine mit variabler Verdichtung kann beispielsweise eine Exzenter-Verstelleinrichtung zur Verstellung einer effektiven Pleuelstangenlänge umfassen. Ein Verstellweg der Exzenter-Verstelleinrichtung kann dabei mittels eines Umschaltventils verstellbar vorgesehen sein.

Ein Verdrehen der verstellbaren Exzenter-Verstelleinrichtung wird durch Einwirken von Massen- und Lastkräften der Brennkraftmaschine initiiert, die bei einem Arbeitstakt der Brennkraftmaschine auf die Exzenter-Verstelleinrichtung wirken. Während eines Arbeitstaktes verändern sich die Wirkungsrichtungen der auf die Exzenter-Verstelleinrichtung wirkenden Kräfte kontinuierlich. Die Drehbewegung oder Verstellbewegung wird durch wenigstens einen mit Hydraulikfluid, insbesondere mit Motoröl, beaufschlagten, in der Hydraulikkammer geführten Kolben unterstützt, bzw. der Kolben verhindert ein Rückstellen der Exzenter-Verstelleinrichtung aufgrund variierender Kraftwirkungsrichtungen der auf die Exzenter-Verstelleinrichtung wirkenden Kräfte.

Die Kolben sind in Hydraulikkammern verschiebbar angeordnet und über Hydraulikfluidleitungen von der Lagerschale eines Hublagerauges oder einem Tank aus mit Hydraulikfluid über Rückschlagventile beaufschlagt. Diese verhindern dabei ein Rückfließen des Hydraulikfluids aus den Hydraulikkammern zurück in die Hydraulikfluidleitungen in die Lagerschale des Hublagerauges, bzw. einen Tank und ermöglichen ein Nachsaugen von Hydraulikfluid in die Hydraulikkammern.

Vorzugsweise schließt sich die Bohrung direkt an die Hydraulikkammer an. Hierdurch kann die Bohrung in einem Arbeitsvorgang mit der Herstellung der Hydraulikkammer hergestellt werden und eine separate Einlassleitung zwischen dem Rückschlagventil und der Hydraulikkammer kann entfallen.

Das Schließelement kann beispielsweise als Kugel ausgebildet sein und der Ventilsitz kann wenigstens teilweise als konkav ausgebildeter Boden der Bohrung vorgesehen sein. Dabei ist die Kugel wie üblich aus Metall gefertigt, wobei auch ein Keramik-Schließelement auf Grund des niedrigen Gewichts und der hohen Verschleißfestigkeit vorteilhaft sein kann. Der Ventilsitz kann direkt im Pleuelkörper vorgesehen und bei der Herstellung der Bohrung ausgebildet sein. Vorteilhafterweise wird der Ventilsitz in einem einzigen Arbeitsgang mit der Bohrung hergestellt.

Eine alternative Ausführungsform sieht vor, dass das Schließelement als Platte ausgebildet ist. Der Ventilsitz dieser Ausführungsform wird als flächiger Boden vorgesehen.

Um ein Durchströmen des Rückschlagventils zu gewährleisten, weist das Schließelement einen geringeren Durchmesser als die Bohrung auf und zwischen dem Schließelement und der Bohrung ist damit ein bestimmtes Spiel vorgesehen.

Falls es erforderlich ist, das Spiel zwischen Schließelement und Bohrung zu begrenzen, kann das Schließelement ein oder mehrere Überströmkanäle aufweisen.

Die Überströmkanäle ermöglichen somit bei gleichzeitig geringem Spiel zwischen Schließelement und Bohrung einen erforderlichen Hydraulikfluidstrom.

Gemäß einer vorteilhaften Ausführungsform der Erfindung ist das Schließelement in einem in der Bohrung angeordnetem Einlegeelement geführt vorgesehen, wobei das Einlegeelement Strömungsaussparungen aufweist, wodurch insbesondere beim Einsatz einer Kugel als Schließelement ein ausreichender Fluidstrom sichergestellt werden kann, ohne eine Führung der Kugel zu verschlechtern.

Vorzugsweise kann ein Hubbegrenzungsmittel in dem Pleuelkörper angeordnet sein, welches den Hub des Schließelementes innerhalb der Bohrung begrenzt, so dass ein Herausfallen des Schließelementes verhindert und gleichzeitig ein schnelles Schließen des Rückschlagventils sichergestellt werden können.

Eine vorteilhafte Ausführung der Erfindung sieht vor, als Hubbegrenzungsmittel ein Zylinderstift vorzusehen, welcher in den Pleuelkörper eingepresst vorgesehen ist. Der Zylinderstift ist als Standardbauteil besonders kostengünstig.

### Kurze Beschreibung der Zeichnungen

Weitere Vorteile ergeben sich aus der folgenden Zeichnungsbeschreibung. In den Zeichnungen sind Ausführungsbeispiele der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Teilquerschnitt B-B eines erfindungsgemäßen Pleuels für eine Brennkraftmaschine mit variabler Verdichtung eines Kraftfahrzeugs mit zwei Ausführungsbeispielen von Rückschlagventilen in schematischer Darstellung in der Stellung für niedrige Verdichtung (ε-low);
- Fig. 2: einen vergrößerten Ausschnitt des Schnittes C-C des Pleuels gemäß Fig. 1;
- Fig. 3: einen vergrößerten Ausschnitt Z des Teilquerschnitts B-B des Pleuels gemäß Fig. 1;
- Fig. 4: einen vergrößerten Ausschnitt X des Teilquerschnitts B-B des Pleuels gemäß Fig. 1;
- Fig. 5: eine Unteransicht des Pleuels gemäß Fig. 1;
- Fig. 6: ein Einlegeelement einer Rückschlagventilausführung in perspektivischer Darstellung des Pleuels gemäß Fig. 1;
- Fig. 7: einen vergrößerten Ausschnitt W des Teilquerschnitts B-B des Pleuels gemäß Fig. 1;
- Fig.8: eine Unteransicht eines erfindungsgemäßen Pleuels für eine Brennkraftmaschine mit variabler Verdichtung eines Kraftfahrzeugs mit zwei Ausführungsbeispielen von Rückschlagventilen in schematischer Darstellung in der Stellung für hohe Verdichtung (ε-high);
- Fig. 9: einen Teilquerschnitt B-B des erfindungsgemäßen Pleuels gemäß Fig. 8;
- Fig. 10: einen vergrößerten Ausschnitt des Schnittes C-C des Pleuels gemäß Fig. 8 und 9;
- Fig. 11: einen vergrößerten Ausschnitt Z des Teilquerschnitts B-B des Pleuels gemäß Fig. 8 und 9;
- Fig. 12: einen vergrößerten Ausschnitt X des Teilquerschnitts B-B des Pleuels gemäß Fig. 8 und 9;
- Fig. 13: ein Schließelement einer Rückschlagventilausführung des Pleuels gemäß Fig. 8 und 9 in perspektivischer Darstellung und
- Fig. 14: einen vergrößerten Ausschnitt W des Teilquerschnitts B-B des Pleuels gemäß Fig. 8 und 9.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

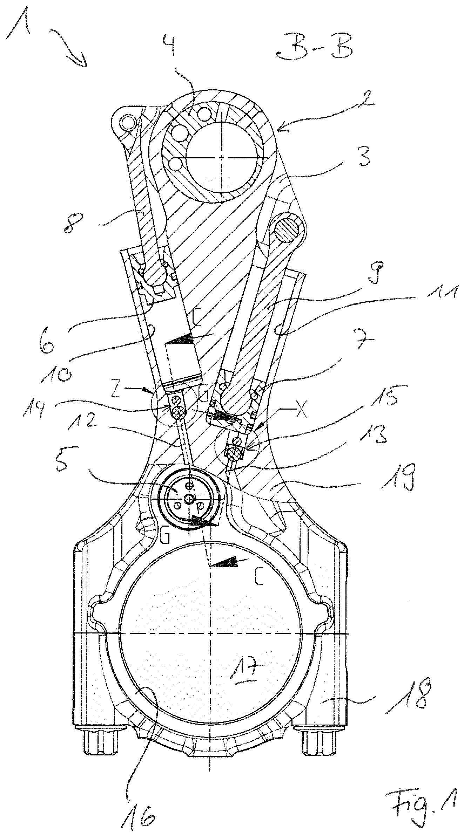

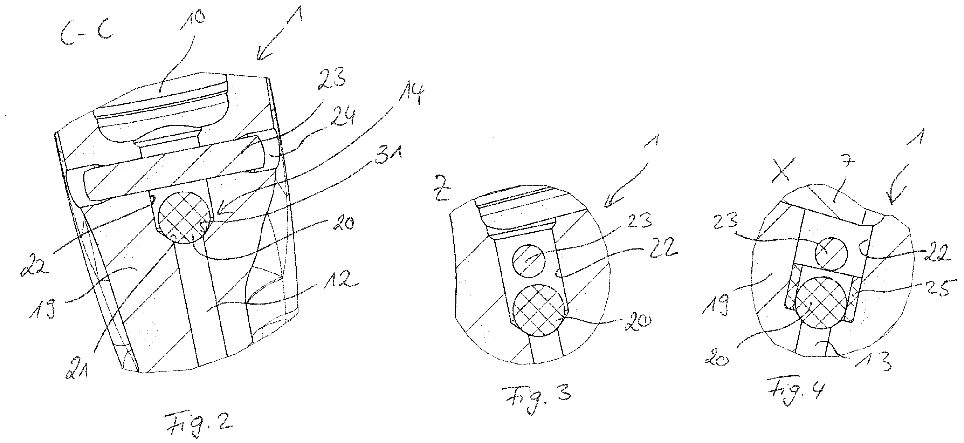

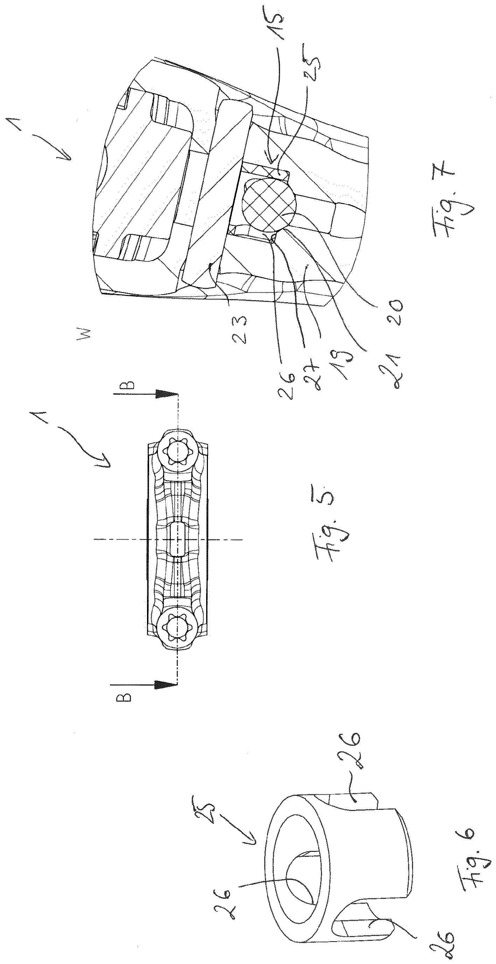

Figur 1 zeigt eine teilweise geschnittene Vorderansicht eines erfindungsgemäßen Pleuels 1 für eine Brennkraftmaschine mit variabler Verdichtung eines Kraftfahrzeugs mit Rückschlagventilen in schematischer Darstellung in einer Stellung für niedrige Verdichtung (ε-low). Dargestellt ist der Teilquerschnitt B-B, welcher in der in Figur 5 dargestellten Unteransicht des Pleuels 1 angedeutet ist. Der Pleuel 1 umfasst eine Exzenter-Verstelleinrichtung 2 zur Verstellung einer effektiven Pleuelstangenlänge. Die Exzenter-Verstelleinrichtung 2 weist einen mit einem ein- oder mehrteiligen Exzenterhebel 3 zusammenwirkenden Exzenter 4 auf. Dabei ist ein Verstellweg der Exzenter-Verstelleinrichtung 2 mittels eines Umschaltventils 5 verstellbar. Den Figuren 2 bis 7 sind weitere Schnitte und teilweise vergrößerte Ansichten und Ausschnitte des Pleuels 1 entnehmbar.

Eine Verdrehung der verstellbaren Exzenter-Verstelleinrichtung 2 wird durch Einwirken von Massen- und Lastkräften der Brennkraftmaschine initiiert, die bei einem Arbeitstakt der Brennkraftmaschine auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen mit Hydraulikfluid, insbesondere mit Motoröl, beaufschlagten, im Pleuel 1 integrierten Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte.

Die Kolben 6, 7 sind mittels Exzenterstangen 8, 9 beidseitig mit dem Exzenterhebel 3 der Exzenter-Verstelleinrichtung 2 wirkverbunden. Die Kolben 6, 7 sind in Hydraulikkammern 10, 11 verschiebbar angeordnet und über Hydraulikfluidleitungen 12, 13 mit Hydraulikfluid über Rückschlagventile 14, 15 beaufschlagt.

Die Hydraulikfluidleitungen 12, 13 sind mit dem Umschaltventil 5 verbunden, welches über wenigstens eine nicht dargestellte Hydraulikfluidleitung mit einer Lagerschale 16 eines Hublagerauges 17 des Pleuels 1 bzw. einem Tank verbunden ist.

Vorteilhaft kann der Pleuel 1 so ausgebildet sein, dass die Bewegungsrichtung der Kolben 6, 7 in Verlängerung von Längsachsen der Hydraulikkammern 10, 11 erfolgt, um so einen möglichst großen Kolbenhub erreichen zu können. Damit kann der Betrieb der Exzenter-Verstelleinrichtung 2 möglichst effizient ausgeführt werden.

Die Rückschlagventile 14, 15 verhindern dabei ein Rückfließen des Hydraulikfluids aus den Hydraulikkammern 10, 11 zurück in die Hydraulikfluidleitungen 12, 13 und ermöglichen ein Nachsaugen von Hydraulikfluid in die Hydraulikkammern 10, 11.

Der Aufbau des beschriebenen Pleuels 1 ist nur beispielhaft dargestellt. So ist es beispielsweise möglich, das Umschaltventil 5 im Bereich eines Pleueldeckels 18 anzuordnen. Das Umschaltventil 5 kann als Hydraulikventil oder alternativ als mechanisch betätigbares Ventil ausgebildet sein. Ferner können die Hydraulikfluidleitungen abweichend von der dargestellten Ausführung vorgesehen sein. Grundsätzlich ist es auch denkbar, die Exzenter-Verstelleinrichtung 2 nur mit einer einzigen Hydraulikkammer und einem einzigen, doppelwirkenden Kolben auszubilden.

Die Rückschlagventile 14, 15 sind in den Figuren 2 bis 4, 6 und 7 in vergrößerter Darstellung und teilweise geschnitten dargestellt. Dabei sind die Rückschlagventile 14, 15 des Pleuels 1 in unterschiedlichen Ausführungen ausgebildet. Grundsätzlich können beide Rückschlagventile 14, 15 jedoch identisch ausgebildet sein und jede der beiden gezeigten und beschriebenen Ausführungen kann den Hydraulikkammern 10, 11 zugeordnet werden.

Eine erste Ausführung des ersten Rückschlagventils 14 ist den Figuren 2 und 3 zu entnehmen, welche den Schnitt C-C bzw. den Ausschnitt Z des Pleuels 1 zeigen. Das Rückschlagventil 14 umfasst ein Schließelement 20 und einen Ventilsitz 21, wobei das Schließelement 20 in Sperrstellung einen Fluidpfad durch Anlage an den Ventilsitz 21 sperrt. Wie aus den Figuren 2 und 3 ersichtlich ist, ist das Schließelement 20 direkt in einer Bohrung 22 eines Pleuelkörpers 19 angeordnet und der Ventilsitz 21 ist direkt in den Pleuelkörper 19 eingebracht. Ein separates Ventilgehäuse und weitere Bauteile können damit gänzlich entfallen. Die Hydraulikfluidleitung 12 schließt sich direkt an die Bohrung 22 bzw. an den Ventilsitz 21 an, erstreckt sich somit ausgehend von der Bohrung 22 in Richtung Umschaltventil 5. Das Rückschlagventil 14 besteht hierdurch aus möglichst wenigen Bauteilen, so dass der Pleuel 1 besonders kostengünstig vorgesehen werden kann. Die Bohrung 22 kann vorteilhafterweise in einem Arbeitsvorgang mit der Herstellung der Hydraulikkammer 10 hergestellt werden und eine separate Einlassleitung zwischen dem Rückschlagventil 14 und der Hydraulikkammer 10 kann entfallen.

Das Schließelement 20 des ersten Rückschlagventils 14 ist als Kugel ausgebildet, welche wie üblich aus Metall gefertigt ist. Ebenso ist ein Keramik-Schließelement auf Grund des niedrigen Gewichts und der hohen Verschleißfestigkeit vorteilhaft denkbar. Der Ventilsitz 21 ist als konkav ausgebildeter Boden 31 der Bohrung 22 vorgesehen, so dass dieser gleichzeitig mit der Bohrung 22 hergestellt werden kann. Die konkave, umlaufende Form des Ventilsitzes 21 kann beispielsweise in einfacher Weise mittels einer 90°-Bohrerspitze in den Pleuelkörper 19 eingebracht werden.

Um ein Durchströmen des Rückschlagventils 14 zu gewährleisten, weist die Kugel als Schließelement 20 einen geringeren Durchmesser als die Bohrung 22 auf, so dass zwischen dem Schließelement 20 und der Bohrung 22 ein bestimmtes Spiel vorgesehen ist.

Weiter ist ein Hubbegrenzungsmittel 23 in Form eines Zylinderstiftes in dem Pleuelkörper 19 angeordnet, welches den Hub des Schließelementes 20 innerhalb der Bohrung 22 begrenzt, so dass ein Herausfallen des Schließelementes 20 verhindert und gleichzeitig ein schnelles Schließen des Rückschlagventils 14 sichergestellt werden können. Der Zylinderstift ist dabei in eine Querbohrung 24 eingepresst vorgesehen, welche die Bohrung 22 durchragt.
Das Hubbegrenzungsmittel 23 ist vorzugsweise als Zylinderstift ausgebildet, welcher als Standardbauteil besonders kostengünstig ist. Denkbar sind jedoch auch andere Bauteile, welche den Hub begrenzen.

Die in den Figuren 1 bis 7 gezeigte Ausführung des zweiten Rückschlagventils 15 sieht vor, die Kugel als Schließelement 20 in einem in der Bohrung 22 angeordneten Einlegeelement 25 zu führen, welches beispielsweise aus Kunststoff vorgesehen ist. Das Einlegeelement 25 weist dabei wenigstens eine oder mehrere Strömungsaussparungen 26 auf, wodurch insbesondere beim Einsatz einer Kugel als Schließelement 20 ein ausreichender Fluidstrom sichergestellt werden kann, ohne eine Führung der Kugel zu verschlechtern.
Als Hubbegrenzungsmittel 23 ist hier ebenso ein eingepresster Zylinderstift vorgesehen, welcher auch gleichzeitig das Einlegeelement 25 in der Bohrung 22 sichert. Der Ventilsitz 21 ist ebenfalls konkav am Boden 27 der Bohrung 22 ausgebildet. Im Unterschied zur ersten Ausführung des Rückschlagventils 14 weist der Boden 27 zusätzlich einen Absatz zum Festlegen des Einlegelementes 25 auf, welcher in den konkaven, umlaufenden Ventilsitz 21 für die Kugel übergeht.

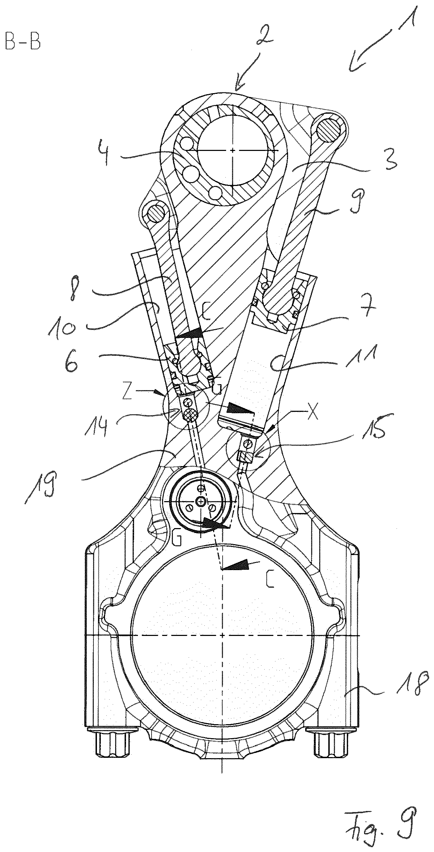

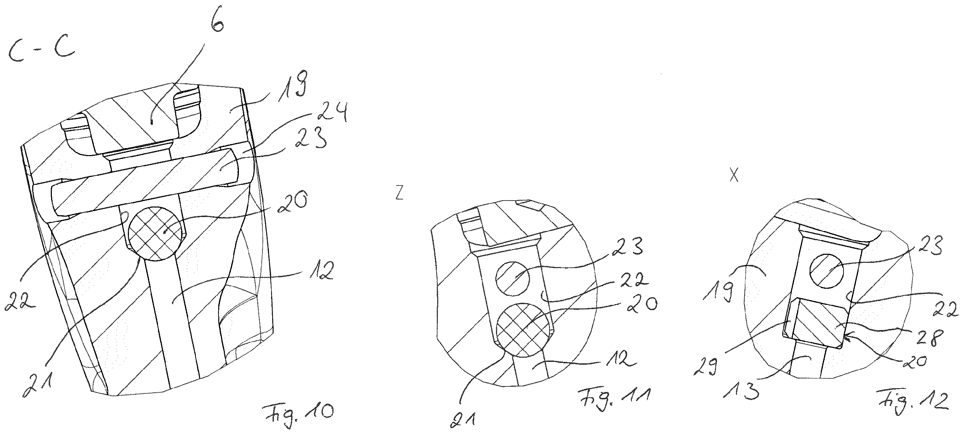

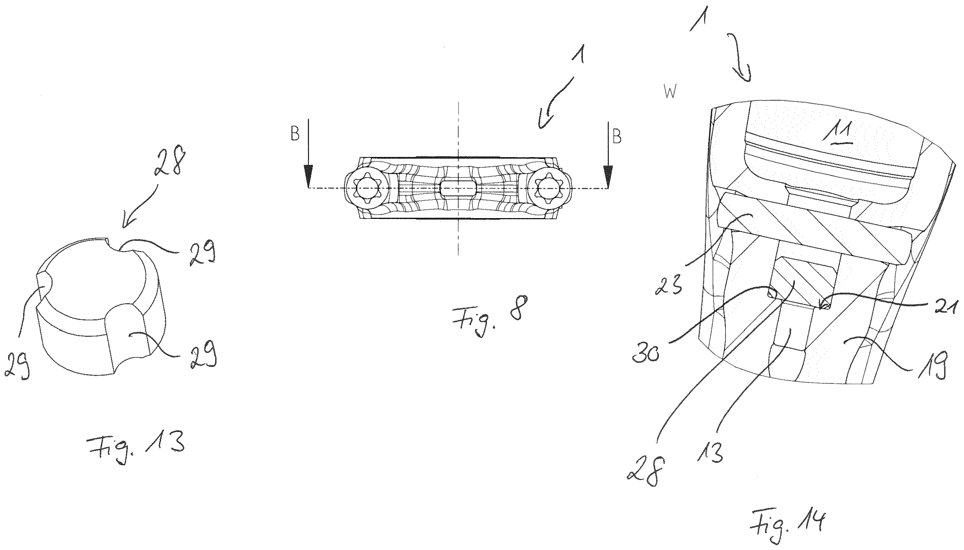

Den Figuren 8 bis 12 ist ein zweites Ausführungsbeispiel eines Pleuels 1 zu entnehmen, welches sich lediglich in der Ausführung des zweiten Rückschlagventils 15 unterscheidet. Das darin gezeigte Rückschlagventil 15 weist im Unterschied zum ersten Ausführungsbeispiel als Schließelement 20 eine in der Bohrung 22 des Pleuelkörpers 19 geführte Platte 28 auf. Die Platte 28 ist mit einem geringen Spiel in der Bohrung 22 geführt vorgesehen und weist an ihrer Außenseite ein oder mehrere Überströmkanäle 29 in Form von Längsnuten auf. Die Überströmkanäle 29 ermöglichen auch bei dieser Ausführung bei gleichzeitig geringem Spiel zwischen Schließelement 20 und Bohrung 22 einen erforderlichen Hydraulikfluidstrom.
Wie insbesondere Figur 14 zu entnehmen ist, ist ein flächiger Boden 30 der Bohrung 22 rechtwinklig zur Öffnungsrichtung der Platte 28 ausgebildet und bildet so den Ventilsitz 21.

## Patentansprüche

1. Pleuel (1) für eine Brennkraftmaschine mit variabler Verdichtung mit wenigstens einer in einem Pleuelkörper (19) ausgebildeten Hydraulikkammer (10, 11), wobei die Hydraulikkammer (10, 11) mittels eines Rückschlagventils (14, 15) mit einer Lagerschale (16) des Pleuels (1) bzw. einem Tank verbindbar ist, wobei das Rückschlagventil (14, 15) ein Schließelement (20) und ein Ventilsitz (21) umfasst, welches Schließelement (20) in Sperrstellung einen Fluidpfad durch Anlage an den Ventilsitz (21) sperrt, **dadurch gekennzeichnet, dass** das Schließelement (20) in einer Bohrung (22) des Pleuelkörpers (19) angeordnet ist und der Ventilsitz (21) direkt in den Pleuelkörper (19) eingebracht vorgesehen ist.

2. Pleuel (1) nach Anspruch 1, **dadurch gekennzeichnet, dass** die Bohrung (22) sich direkt an die Hydraulikkammer (10, 11) anschließt.

3. Pleuel (1) nach Anspruch 1 oder 2, **dadurch gekennzeichnet, dass** das Schließelement (20) als Kugel ausgebildet und der Ventilsitz (21) wenigstens teilweise als konkav ausgebildeter Boden (27, 31) der Bohrung vorgesehen ist.

4. Pleuel (1) nach Anspruch 2, **dadurch gekennzeichnet, dass** das Schließelement (20) als Platte (28) ausgebildet ist.

5. Pleuel (1) nach einem der vorangegangenen Ansprüche, **dadurch gekennzeichnet, dass** das Schließelement (20) einen geringeren Durchmesser als die Bohrung (22) aufweist.

6. Pleuel (1) nach einem der vorangegangenen Ansprüche, **dadurch gekennzeichnet, dass** das Schließelement (20) ein oder mehrere Überströmkanäle (29) aufweist.

7. Pleuel (1) nach einem der vorangegangenen Ansprüche 1 bis 4, **dadurch gekennzeichnet, dass** das Schließelement (20) in einem in der Bohrung (22) angeordnetem Einlegeelement (25) geführt vorgesehen ist, wobei das Einlegeelement (25) Strömungsaussparungen (26) aufweist.

8. Pleuel (1) nach einem der vorangegangenen Ansprüche, **dadurch gekennzeichnet, dass** ein Hubbegrenzungsmittel (23) in dem Pleuelkörper (19) angeordnet ist, welches den Hub des Schließelementes (20) innerhalb der Bohrung (22) begrenzt.

9. Pleuel (1) nach Anspruch 8, **dadurch gekennzeichnet, dass** als Hubbegrenzungsmittel (23) ein Zylinderstift vorgesehen ist, welcher in den Pleuelkörper (19) eingepresst vorgesehen ist.

10. Brennkraftmaschine mit einem einstellbaren Verdichtungsverhältnis mit wenigstens einem Pleuel (1) der vorangegangenen Ansprüche.

## Claims

1. Connecting rod (1) for an internal combustion engine with variable compression having at least one hydraulic chamber (10, 11) which is configured in a connecting rod body (19), it being possible for the hydraulic chamber (10, 11) to be connected by means of a check valve (14, 15) to a bearing shell (16) of the connecting rod (1) or a tank, the check valve (14, 15) comprising a closing element (20) and a valve seat (21), which closing element (20) shuts off a fluid path in the shut-off position by way of bearing against the valve seat (21), **characterized in that** the closing element (20) is arranged in a bore (22) of the connecting rod body (19), and the valve seat (21) is provided in a manner which is introduced directly into the connecting rod body (19).

2. Connecting rod (1) according to Claim 1, **characterized in that** the bore (20) adjoins the hydraulic chamber (10, 11) directly.

3. Connecting rod (1) according to Claim 1 or 2, **characterized in that** the closing element (20) is configured as a ball, and the valve seat (21) is provided at least partially as a concavely configured bottom (27, 31) of the bore.

4. Connecting rod (1) according to Claim 2, **characterized in that** the closing element (20) is configured as a plate (28).

5. Connecting rod (1) according to one of the preceding claims, **characterized in that** the closing element (20) has a smaller diameter than the bore (22).

6. Connecting rod (1) according to one of the preceding claims, **characterized in that** the closing element (20) has one or more overflow ducts (29).

7. Connecting rod (1) according to one of the preceding Claims 1 to 4, **characterized in that** the closing element (20) is provided in a manner which is guided in an insert element (25) which is arranged in the bore (22), the insert element (25) having flow cutouts (26).

8. Connecting rod (1) according to one of the preceding claims, **characterized in that** a stroke limitation means (23) is arranged in the connecting rod body (19), which stroke limitation means (23) limits the stroke of the closing element (20) within the bore (22).

9. Connecting rod (1) according to Claim 8, **characterized in that** a cylindrical pin which is provided in a manner which is pressed into the connecting rod body (19) is provided as stroke limitation means (23).

10. Internal combustion engine with an adjustable compression ratio having at least one connecting rod (1) of the preceding claims.

## Revendications

1. Bielle (1) destinée à un moteur à combustion interne à compression variable et comprenant au moins une chambre hydraulique (10, 11) formée dans un corps de bielle (19), la chambre hydraulique (10, 11) pouvant être reliée à un coussinet (16) de la bielle (1) ou à un réservoir à l'aide d'une soupape anti-retour (14, 15), la soupape anti-retour (14, 15) comprenant un élément de fermeture (20) et un siège de soupape (21), lequel élément de fermeture (20) bloque, en position de blocage, un passage de fluide par appui sur le siège de soupape (21), **caractérisé en ce que** l'élément de fermeture (20) est disposé dans un alésage (22) du corps de bielle (19) et le siège de soupape (21) est prévu pour être introduit directement dans le corps de bielle (19).

2. Bielle (1) selon la revendication 1, **caractérisée en ce que** l'alésage (22) est directement adjacent à la chambre hydraulique (10, 11).

3. Bielle (1) selon la revendication 1 ou 2, **caractérisée en ce que** l'élément de fermeture (20) est conçu comme une bille et le siège de soupape (21) est au moins partiellement prévu comme un fond concave (27, 31) de l'alésage.

4. Bielle (1) selon la revendication 2, **caractérisée en ce que** l'élément de fermeture (20) est conçu sous la forme d'une plaque (28).

5. Bielle (1) selon l'une des revendications précédentes, **caractérisée en ce que** l'élément de fermeture (20) a un diamètre inférieur à celui de l'alésage (22).

6. Bielle (1) selon l'une des revendications précédentes, **caractérisée en ce que** l'élément de fermeture (20) comporte au moins un conduit de trop-plein (29).

7. Bielle (1) selon l'une des revendications précédentes 1 à 4, **caractérisée en ce que** l'élément de fermeture (20) est prévu pour être guidé dans un élément d'insertion (25) disposé dans l'alésage (22), l'élément d'insertion (25) comportant des évidements d'écoulement (26).

8. Bielle (1) selon l'une des revendications précédentes, **caractérisée en ce qu'**un moyeu de limitation de course (23) est disposé dans le corps de bielle (19) et limite la course de l'élément de fermeture (20) dans l'alésage (22).

9. Bielle (1) selon la revendication 8, **caractérisée en ce qu'**une broche cylindrique est prévue comme moyen de limitation de course (23) et est prévue pour être enfoncée dans le corps de bielle (19).

10. Moteur à combustion interne à taux de compression réglable comprenant au moins une bielle (1) selon les revendications précédentes.
